# EUROPEAN PATENT SPECIFICATION

(11) **EP 3 900 270 B1**
(45) Date of publication and mention of the grant of the patent: **30.10.2024**
(21) Application number: 20747723.3
(22) Date of filing: 30.01.2020
(51) Int. Cl.: H04L 67/50, H04L 67/12, H04L 67/125, G06N 5/02, G06N 5/04, H04L 12/28, H04W 4/02

(54) **SYSTEM FOR PROCESSING USER DATA AND CONTROLLING METHOD THEREOF**
SYSTEM ZUR VERARBEITUNG VON BENUTZERDATEN UND STEUERUNGSVERFAHREN DAFÜR
SYSTÈME PERMETTANT DE TRAITER DES DONNÉES D'UTILISATEUR ET SON PROCÉDÉ DE COMMANDE

(30) Priority: 30.01.2019 KR 20190012225
(43) Date of publication of application: 27.10.2021
(73) Proprietor: Samsung Electronics Co., Ltd., Suwon-si, Gyeonggi-do 16677 (KR)
(72) Inventor: PARK, Seunghoon, Suwon-si, Gyeonggi-do 16677 (KR); KWAK, Joonsup, Suwon-si, Gyeonggi-do 16677 (KR); KOO, Kihyeok, Suwon-si, Gyeonggi-do 16677 (KR); YEO, Jaeyung, Suwon-si, Gyeonggi-do 16677 (KR)
(74) Representative: Nederlandsch Octrooibureau
(86) International application number: PCT/KR2020/001432
(87) International publication number: WO 2020/159255

(56) References cited:
- WO-A1-2015/129566
- KR-A- 20170 047 117
- KR-A- 20180 037 740
- US-A1- 2015 066 158
- US-A1- 2015 254 724
- US-A1- 2018 091 381
- US-A1- 2018 323 991

## Description

### Technical Field

The disclosure relates to a technology for processing user data.

### Background Art

In addition to an input scheme using a keyboard or a mouse according to the related art, recent electronic devices may support various input schemes such as a voice input and the like. For example, the electronic devices such as a smartphone or a tablet personal computer (PC) may recognize a user's voice entered while a speech recognition service is executed and then may execute an action corresponding to a voice input or may provide the found result.

Nowadays, the speech recognition service is being developed based on a technology for processing a natural language. The technology for processing a natural language refers to a technology that grasps the intent of the user utterance and provides the user with the result matched with the intent. A user may set a scene that specifies the actions of devices belonging to the corresponding group to control a plurality of Internet of Thing (IoT) devices at the same time. The user may directly enter the scene. The scene may usually be set for devices in the same place. It is possible to simultaneously execute the devices included in the scene in batches. The scene may be registered to correspond to each user one-to-one.

An electronic device may store the scene defined by the user. For example, the scene may include a set of devices to be executed in batches or the states of such the devices. When the scene is called by the user, the electronic device may operate the devices associated with the called scene or may control such the devices so as to become in a specific state. The scenes may be defined based on the user's context (e.g., a location, a time, a state, or the like). Accordingly, the user may store the scene corresponding to a specific context and may call the stored scene to collectively execute a plurality of devices corresponding to the specific context.

The above information is presented as background information only to assist with an understanding of the disclosure. No determination has been made, and no assertion is made, as to whether any of the above might be applicable as prior art with regard to the disclosure.

US 2018091381 A1 discloses a user device that can automatically generate scene suggestions and/ or trigger suggestions. For example, a scene can be a collection of accessories and corresponding accessory states. When the scene is invoked, the user device can cause the accessories associated with the scene to assume the corresponding accessory states. The user device can automatically determine the accessories and/or corresponding accessory states for a scene based on historical patterns of use represented in historical accessory state data. The user device can automatically determine triggers for automatically invoking scenes based on historical patterns of use. For example, the user device can analyze historical context (e.g., location, time, accessory state, etc.) data associated with accessory state transitions to determine triggers for automatically invoking a scene. The user device can present suggest scenes and/or triggers to the user of the user device.

US 2018323991 A1 discloses methods and systems for initiating a unique user experience using an ambient operating system connected to a variety of disparate devices. The described solution includes a curated scene or set of actions initiated by an assistant device.

WO 2015129566 A1 relate to methods and systems for controlling electric equipment in a house based on monitoring of location of users living in the house.

### Disclosure of Invention

### Technical Problem

A scene may be generated by a user, and the user may register the devices to be included in the scene. The user may register (e.g., the registration of automatic execution) the information indicating which scene is executed in any context, in the electronic device such that an electronic device automatically executes the generated scene or the scene is executed automatically. Furthermore, when the usage pattern of the device included in the scene is changed, the user may manually change the settings of the device, and when a new device is added to the scene, the user may manually register the new device. Only the batch execution of the devices included in the scene may be considered during auto-run, the order in which the devices included in the scene are executed may not be considered. Furthermore, the scene may be registered to correspond to each user one-to-one, and various contexts according to the combination of a plurality of users may not be considered.

### Solution to Problem

Aspects of the disclosure are to address at least the above-mentioned problems and/or disadvantages and to provide at least the advantages described below. Accordingly, an aspect of the disclosure is to provide a system capable of generating a scene based on a user context and recommending the scene.

Additional aspects will be set forth in part in the description which follows and, in part, will be apparent from the description, or may be learned by practice of the presented embodiments.

In accordance with an aspect of the disclosure, a system is provided according to claim 1.

In accordance with another aspect of the disclosure, an operating method of a system is provided according to claim 8.

Other aspects, advantages, and salient features of the disclosure will become apparent to those skilled in the art from the following detailed description, which, taken in conjunction with the annexed drawings, discloses various embodiments of the disclosure.

### Advantageous Effects of Invention

According to embodiments disclosed in the specification, a system may determine a user context and may generate and recommend a scene based on the user context.

According to embodiments disclosed in the specification, when generating the scene, the system may include devices associated with the user in the scene, based on the user context regardless of the location of the device.

According to embodiments disclosed in the specification, the system may select devices to be included in the scene based on the user context and may generate the scene in consideration of the execution order of the devices.

According to embodiments disclosed in the specification, the system may generate and recommend different scenes for each combination of users registered in the device included in the scene.

Besides, a variety of effects directly or indirectly understood through the disclosure may be provided.

### Brief Description of Drawings

The above and other aspects, features, and advantages of certain embodiments of the disclosure will be more apparent from the following description taken in conjunction with the accompanying drawings, in which:
FIG. 1 is a block diagram illustrating an artificial intelligence system according to an embodiment of the disclosure;
FIG. 2 is a block diagram illustrating an example of a context server of FIG. 1 according to an embodiment of the disclosure;
FIG. 3 is a diagram schematically illustrating an action of a device usage track unit of FIG. 1 according to an embodiment of the disclosure;
FIG. 4 is a view illustrating a usage pattern analyzing method according to an embodiment of the disclosure;
FIG. 5 is a flowchart illustrating a method of recommending a scene according to an embodiment of the disclosure;
FIG. 6 is a flowchart illustrating an example of a usage pattern analyzing method of FIG. 5 according to an embodiment of the disclosure;
FIG. 7 is a flowchart illustrating an example of a scene generating method of FIG. 5 according to an embodiment of the disclosure;
FIG. 8 is a flowchart illustrating a method of recommending a scene according to an embodiment of the disclosure;
FIG. 9 is a view illustrating a method of displaying a recommended scene according to an embodiment of the disclosure;
FIG. 10 is a view illustrating a method of displaying a recommended additional action according to an embodiment of the disclosure;
FIG. 11 is a view illustrating a method of displaying a recommended scene according to an embodiment of the disclosure;
FIG. 12 is a view illustrating a method of displaying a recommended additional action according to an embodiment of the disclosure; and
FIG. 13 is a block diagram illustrating an electronic device in a network environment according to an embodiment of the disclosure.

Throughout the drawings, like reference numerals will be understood to refer to like parts, components, and structures.

### Mode for the Invention

The following description with reference to accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the invention defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims .

It is to be understood that the singular forms "a", "an", and "the" include plural referents unless the context clearly dictates otherwise. Thus, for example, reference to "a component surface" includes reference to one or more of such surfaces.

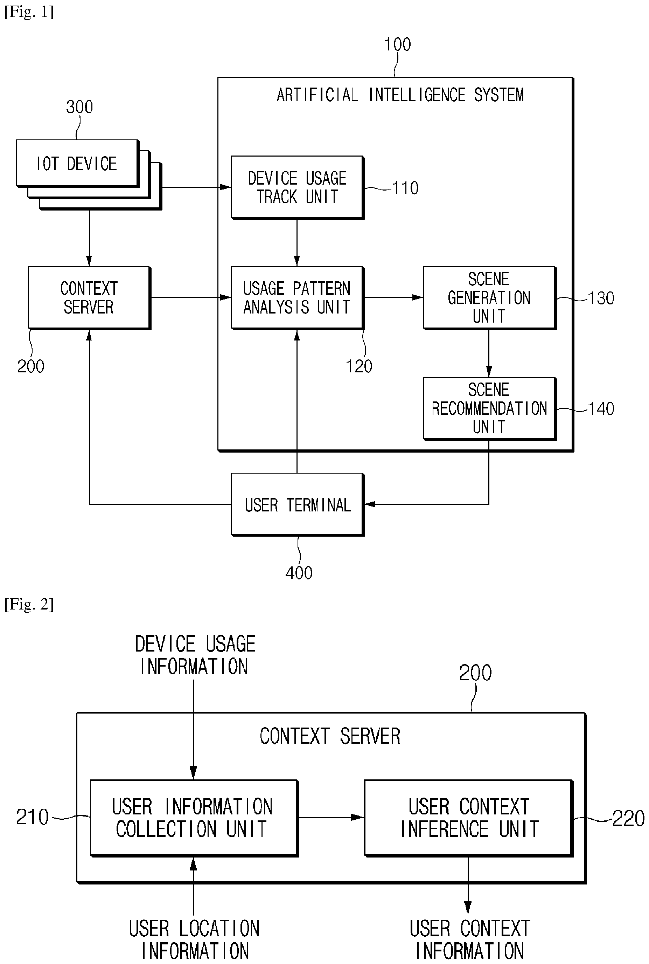

FIG. 1 is a block diagram illustrating an artificial intelligence system according to an embodiment of the disclosure.

FIG. 2 is a block diagram illustrating an example of a context server of FIG. 1 according to an embodiment of the disclosure.

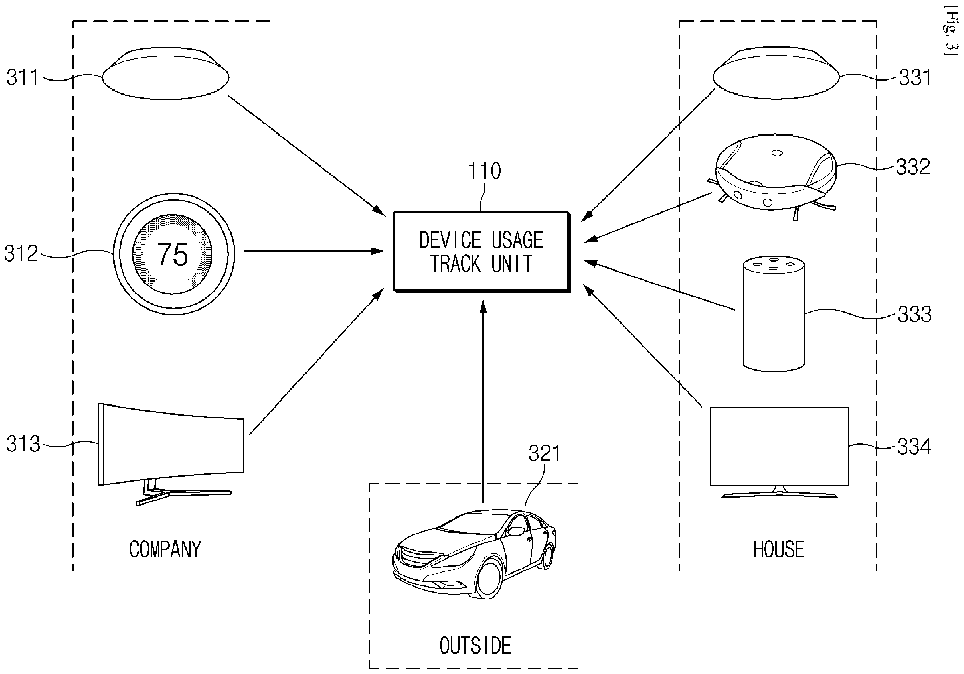

FIG. 3 is a diagram schematically illustrating an action of a device usage track unit of FIG. 1 according to an embodiment of the disclosure.

Referring to FIGS. 1, 2, and 3, an artificial intelligence system 100 may analyze the usage pattern of IoT devices 300 (e.g., a device (e.g., a lighting device 311, an air conditioner 312, or a monitor 313) associated with the first place (e.g., a company), a device (e.g., a vehicle information system 321) associated with the second place (e.g., the outside), a device (e.g., the lighting device 311, a robot vacuum 332, a home speaker 333, a television (TV) 334) associated with the third place (e.g., house), which are used by a user, and then may generate and recommend a scene

According to an embodiment, the scene may include the action (or state) of at least one of the IoT devices 300. A user of the user terminal 400 may be registered in the IoT devices 300. Hereinafter, it is assumed that the IoT devices 300 are devices registered by the user of a user terminal 400.

According to an embodiment, the artificial intelligence system 100 may generate and recommend a scene based on the user context of a specific user (e.g., the user of the user terminal 400). For example, the scene may define the actions of one or more devices, depending on the user context of the specific user.

According to an embodiment, the IoT devices 300 may be included in a single scene regardless of a location. For example, the IoT devices 300 included in the scene may be present in different places (e.g., a company, an outside, a house, etc.).

According to an embodiment, in a single scene, the actions (or states) of the IoT devices 300 may be set to have time series characteristics (e.g., the sequential start or end). For example, the actions (or states) of the loT devices 300 included in the scene may be set to be started or ended at different points in time.

According to an embodiment, when there are a plurality of users registered in the IoT devices 300, the artificial intelligence system 100 may generate various scenes depending on the combination of the plurality of users. For example, when a specific user exclusively employs the IoT devices 300, the artificial intelligence system 100 may generate a first scene. When there is an additional user present besides the specific user, the artificial intelligence system 100 may generate a second scene different from the first scene. The first scene and the second scene may include different devices among the IoT devices 300 or may include different actions (or states) for the same device.

According to an embodiment, the user context may refer to a user's behavioral pattern (e.g. working, on returning home, driving, resting, cleaning, etc.), not simply the user's location (e.g., a company, an outside, a house, etc.). The user context may be inferred through the location information of the user and the device usage pattern of the user. For example, referring to FIG. 3, when the user's location is a company and the lighting device 311, the air conditioner 312, and the monitor 313 of the company are operating during a specific time, the context of the user may be determined as "working." The user context may refer to the state of the user within a specific time interval.

According to an embodiment, the context server 200 may infer a user context (e.g., working, returning home, driving, resting, cleaning, etc.) to generate user context information including the user context. For example, the context server 200 may include a user information collection unit 210 and a user context inference unit 220. The user information collection unit 210 may receive device usage information from the IoT devices 300. The device usage information may include a device usage log (e.g., device action information for each place or for each time) and service information (e.g., the program execution information of the IoT devices 300). The context server 200 may receive user location information (e.g., access information for each place) from the user terminal 400. The user context inference unit 220 may generate user context information based on the device usage information and the user location information. The generated user context information may be provided to the artificial intelligence system 100.

According to an embodiment, the artificial intelligence system 100 may include a device usage track unit 110, a usage pattern analysis unit 120, a scene generation unit 130, and a scene recommendation unit 140. The artificial intelligence system 100 may include a communication circuit, a memory, and a processor. The processor may drive the device usage track unit 110, the usage pattern analysis unit 120, the scene generation unit 130, and the scene recommendation unit 140 by executing the instructions stored in the memory. The artificial intelligence system 100 may transmit or receive data (or information) to or from an external electronic device (e.g., the context server 200, the IoT devices 300, and the user terminal 400) through the communication circuit.

According to an embodiment, the device usage track unit 110 may receive the attribute of each of the IoT devices 300, the state of each of the IoT devices 300, or a value corresponding to the state.

According to an embodiment, the device usage track unit 110 may receive the device usage log from the IoT devices 300. The device usage log may be collected for a specific user (e.g., the registered user) (e.g., based on the user's account). For example, the device usage log may include an action record of each of the IoT devices 300 for each user, for each time, or for each place. The device usage track unit 110 may periodically collect the device usage log of each of the IoT devices 300.

According to an embodiment, the device usage track unit 110 may collect the device usage log of a specific user together with the location information. For example, the device usage track unit 110 may collect the location information of each of the IoT devices 300. The device usage track unit 110 may directly obtain the location information from the IoT devices 300. Alternatively, the device usage track unit 110 may obtain the location information of each of the IoT devices 300 from another device besides the IoT devices 300. The device usage log may be stored together with the location information of each of the IoT devices 300.

According to an embodiment, the device usage track unit 110 may collect the device usage log of a specific user together with the time information. For example, the device usage track unit 110 may record the actions of the devices used by a specific user, depending on the time order.

According to an embodiment, the device usage track unit 110 may collect the device usage log depending on whether an additional user is present. For example, the device usage track unit 110 may store the device usage log in the case when the specific user exclusively employs the device. Moreover, the device usage track unit 110 may store the device usage log when the additional user besides the specific user is present.

According to an embodiment, the usage pattern analysis unit 120 may determine whether the additional user is present. For example, the usage pattern analysis unit 120 may receive the location information of the specific user from the user terminal 400. The usage pattern analysis unit 120 may receive the location information of another user from another user terminal (not illustrated). The usage pattern analysis unit 120 may determine whether the additional user besides the specific user is present, based on the location information of the specific user and the location information of another user.

According to an embodiment, the usage pattern analysis unit 120 may receive information associated with the user terminal 400, the location and time of the user terminal 400, the application (app) used by the user terminal 400, or information about a device besides the user terminal 400, from the user terminal 400.

According to an embodiment, the usage pattern analysis unit 120 may analyze the device usage pattern of the user based on the user context. For example, the usage pattern analysis unit 120 may receive the device usage log of each of the IoT devices 300 with respect to the specific user, from the device usage track unit 110. The usage pattern analysis unit 120 may receive the user context information of the specific user, from the context server 200. The usage pattern analysis unit 120 may generate device usage pattern information, by integrating the device usage information and the user context information. The device usage pattern information may include the action states of the IoT devices 300 according to the place and time. The device usage pattern information may be generated to correspond to the user context of the specific user one-to-one. The device usage pattern information may be generated differently depending on whether an additional user is present.

According to an embodiment, the scene generation unit 130 may generate a scene for the specific user, based on the device usage pattern information. For example, the scene generation unit 130 may determine target devices associated with (or to be included in the scene) each other among the IoT devices 300, based on the device usage pattern information. The scene generation unit 130 may define the action of each of the determined target devices, based on the device usage pattern information. The scene generation unit 130 may define the order relation of actions of target devices, based on the device usage pattern information.

According to an embodiment, the scene generation unit 130 may generate the scene corresponding to the user context of a specific user alone or the scene corresponding to the user context in the case where the additional user is present, based on whether the additional user is present.

According to an embodiment, the scene recommendation unit 140 may recommend the generated scene to the user. For example, the scene recommendation unit 140 may transmit the generated scene to the user terminal 400. The user terminal 400 may display the received scene on a screen.

According to an embodiment, the user terminal 400 may register the recommended scene as a command corresponding to a voice assistant call. For example, the user may control the IoT devices 300 depending on the corresponding scene by calling the registered command with a voice.

As described above, according to various embodiments, the artificial intelligence system 100 may identify the current user context, may analyze the device usage pattern of the IoT devices 300 in the current user context, and may generate the scene corresponding to the user context. The generated scene may include the actions (or states) of target devices used in various places. The time series characteristics of the actions (or states) of target devices may be defined in the generated scene. The generated scene may be generated differently depending on whether an additional user is present.

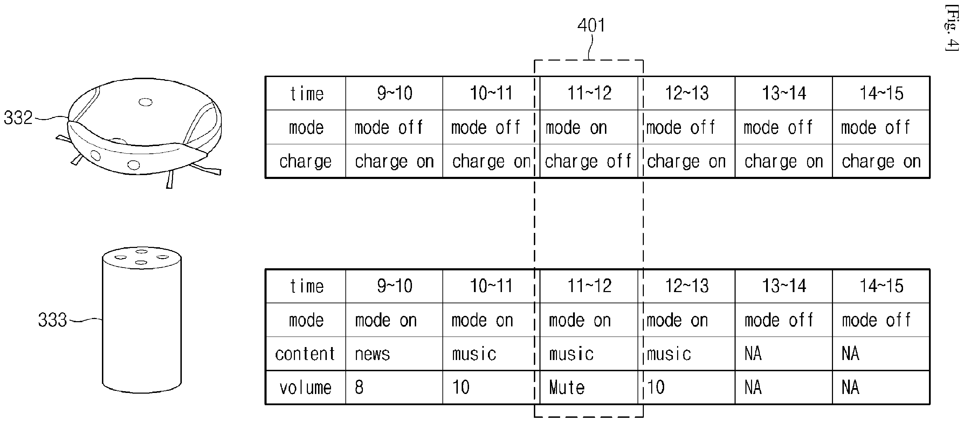

FIG. 4 is a view illustrating a usage pattern analyzing method according to an embodiment of the disclosure.

Referring to FIGS. 1, 2, 3, and 4, the device usage track unit 110 may collect the device usage log of each of a first device (e.g., the robot vacuum 332) and the second device (e.g., the speaker 333), with respect to a specific user. The context server 200 may generate the user context information (e.g., cleaning at home), based on the device usage log of each of the first device and the second device and the user location information (e.g., a house) of the specific user. The usage pattern analysis unit 120 may receive the user location information from the user terminal 400 to identify that an additional user is not present. The usage pattern analysis unit 120 may identify the action associated with the first device and the second device. The usage pattern analysis unit 120 may generate device usage pattern information 401 (e.g., the speaker 333 is muted when the robot vacuum 332 is activated) of the first device and the second device in the current user context (e.g., cleaning). The scene generation unit 130 may generate the scene (e.g., the speaker 333 is muted when the robot vacuum 332 is operated) based on the device usage pattern information 401. The scene recommendation unit 140 may provide the generated scene to the user terminal 400.

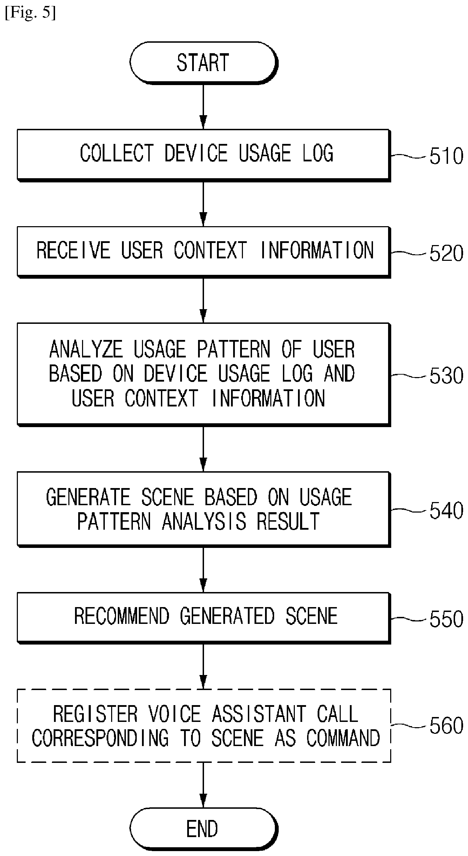

FIG. 5 is a flowchart illustrating a method of recommending a scene according to an embodiment of the disclosure.

Referring to FIG. 5, according to an embodiment, in operation 510, an artificial intelligence system (e.g., the artificial intelligence system 100) may collect the device usage log of IoT devices (e.g., the IoT devices 300) registered in a user terminal (e.g., the user terminal 400). For example, the device usage log may include the usage record of each of IoT devices for each user, time, or place. The artificial intelligence system may periodically collect the device usage log of each of the IoT devices.

According to an embodiment, the artificial intelligence system may collect the device usage log of a specific user together with the location information. For example, the artificial intelligence system may collect the location information of each of the IoT devices. The artificial intelligence system may directly obtain the location information from the IoT devices. Alternatively, the artificial intelligence system may obtain the location information of each of the IoT devices from another device besides the IoT devices. The device usage log may be stored together with the location information of each of the IoT devices.

According to an embodiment, the artificial intelligence system may collect the device usage log of a specific user together with the time information. For example, the artificial intelligence system may record the actions of the devices used by a specific user, depending on the time order.

According to an embodiment, the artificial intelligence system may collect the device usage log depending on whether an additional user is present. For example, the artificial intelligence system may store the device usage log in the case when a specific user exclusively employs a device. Moreover, the artificial intelligence system may store the device usage log when the additional user besides the specific user is present.

According to an embodiment, in operation 520, the artificial intelligence system may receive user context information (e.g., working, returning home, driving, resting, cleaning, etc.) from a context server (e.g., the context server 200). For example, the context server may infer the user context to generate the user context information including the user context. The context server may receive the device usage information from the IoT devices. The device usage information may include the device usage log (e.g., device action information for each place or for each time) and service information (e.g., the program execution information of the IoT devices). The context server may receive user location information (e.g., access information for each place) from the user terminal. The context server may generate user context information based on the device usage information and the user location information.

According to an embodiment, in operation 530, the artificial intelligence system may analyze the device usage pattern of a user, based on the device usage log and the user context information. For example, the artificial intelligence system may generate the device usage pattern information associated with the action of the target devices by selecting the associated target devices in the user context of the specific user.

According to an embodiment, in operation 540, the artificial intelligence system may generate the scene based on the device usage pattern analysis result (e.g., device usage pattern information). For example, the device usage pattern information may include the action state of the IoT devices according to the place and time. The scene may include a plurality of scenes. The plurality of scenes included in the scene may have time series characteristics. The scene may define the action of at least one of IoT devices. The scene may define the actions of one or more devices, depending on the user context of the specific user. In the scene, the one or more devices may be present in different places (e.g., a company, an outside, a house, etc.). In the scene, the actions of the one or more devices may be defined to be started at different points in time. In the scene, the actions of the one or more devices may be defined to have time series characteristics (e.g., the sequential start or end). In the scene, the actions of the one or more devices may be defined in association with the movement of the user's location. The scene associated with a specific user may be defined to the case where a specific user exclusively employs IoT devices. When an additional user besides the specific user is present, the scene associated with the specific user may be defined differently from the case where the specific user exclusively employs IoT devices.

According to an embodiment, in operation 550, the artificial intelligence system may recommend the generated scene to the user. For example, the artificial intelligence system may transmit the generated scene to a user terminal. The user terminal may display the received scene on a screen.

According to an embodiment, in operation 560, the user terminal may register the recommended scene as the command corresponding to a voice assistant call. For example, the user may control the IoT devices depending on the corresponding scene by calling the registered command with a voice. According to various embodiments, the artificial intelligence system may register the voice assistant call corresponding to the recommended scene as the command and may transmit the registered command to the user terminal.

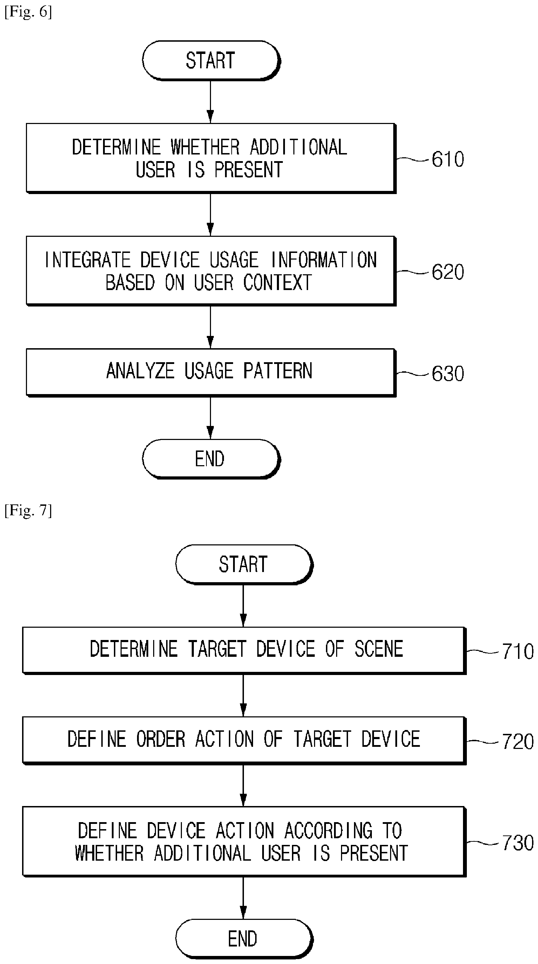

FIG. 6 is a flowchart illustrating an example of a usage pattern analyzing method of FIG. 5 according to an embodiment of the disclosure.

Referring to FIG. 6, according to an embodiment, in operation 610, an artificial intelligence system may determine whether an additional user is present. For example, the artificial intelligence system may receive user location information from user terminals (e.g., the user terminal 400 and another user terminal). The artificial intelligence system may determine whether the current user context is the user context of a specific user alone or is a user context in which the additional user is present, based on the received user location information.

According to an embodiment, in operation 620, the artificial intelligence system may integrate the device usage log of each of IoT devices, based on the user context information. For example, when the user context information and the device usage log are integrated, the artificial intelligence system may store information indicating that the additional user is present, together.

According to an embodiment, in operation 630, the artificial intelligence system may analyze the device usage pattern of the user based on the user context. For example, the artificial intelligence system may generate device usage pattern information. The device usage pattern information may include the action state of the IoT devices according to place and time.

FIG. 7 is a flowchart illustrating an example of a scene generating method of FIG. 5 according to an embodiment of the disclosure.

Referring to FIG. 7, according to an embodiment, in operation 710, the artificial intelligence system may determine target devices included in a scene based on a user context.

According to an embodiment, in operation 720, the artificial intelligence system may define the order action of the determined target devices. For example, the artificial intelligence system may define the action of each of target devices, based on the user context. The artificial intelligence system may determine the order relation of the actions of target devices.

According to an embodiment, in operation 730, the artificial intelligence system may define the device action according to whether an additional user is present. For example, when there is another user present besides the specific user, the artificial intelligence system may define the actions of target devices differently from the case of the specific user alone.

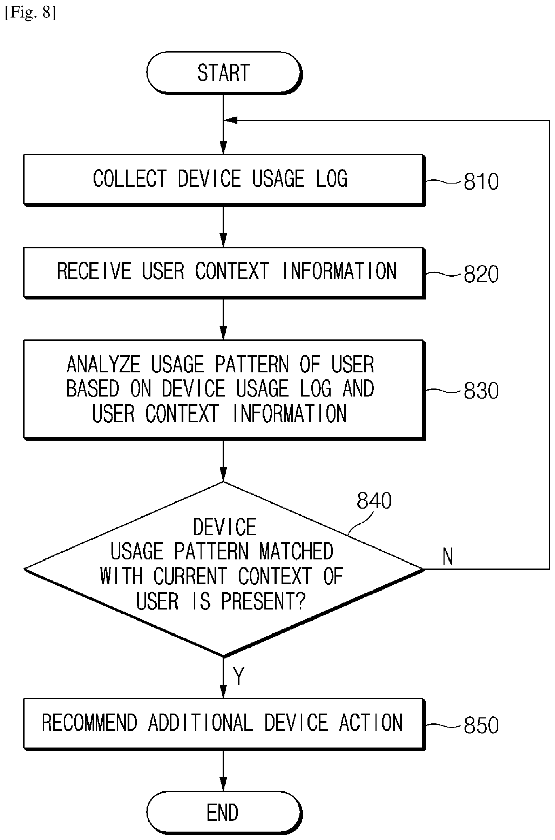

FIG. 8 is a flowchart illustrating a method of recommending a scene according to an embodiment of the disclosure.

Referring to FIG. 8, according to an embodiment, in operation 810, an artificial intelligence system (e.g., the artificial intelligence system 100) may collect the device usage log of IoT devices (e.g., the IoT devices 300) registered in a user terminal (e.g., the user terminal 400).

According to an embodiment, the artificial intelligence system may receive the device usage log from IoT devices. For example, the device usage log may include the usage record of each of IoT devices for each user, time, or place. The artificial intelligence system may periodically collect the device usage log of each of the IoT devices.

According to an embodiment, the artificial intelligence system may collect the device usage log according to the location of a specific user. For example, when the specific user moves between a first place (e.g., a company), a second place (e.g., outside), and a third place (e.g., home), the artificial intelligence system may collect the usage logs of devices (e.g., the lighting device 311, the air conditioner 312, and the monitor 313) used in the first place, devices (e.g., the vehicle information system 321) used in the second place, and devices (e.g., the lighting device 331, the robot vacuum 332, the speaker 333, and the TV 334) used in the third place, with respect to the specific user.

According to an embodiment, the artificial intelligence system may collect the device usage log of the specific user, with time. For example, the artificial intelligence system may record the action (e.g., turn on or turn off) according to the time order of the devices used by the specific user.

According to an embodiment, the artificial intelligence system may collect the device usage log with respect to a plurality of users. For example, when the plurality of users are registered with respect to the specific device, the artificial intelligence system may collect the device usage log with respect to each of the plurality of users. When one of the plurality of users exclusively employs a specific device, the artificial intelligence system may collect the device usage log. Moreover, when the plurality of users employ a specific device while being present in a same place with one another, the artificial intelligence system may collect the device usage log.

According to an embodiment, the artificial intelligence system may store location information of IoT devices. For example, the artificial intelligence system may directly obtain the location information from the IoT devices. Alternatively, the artificial intelligence system may obtain the location information of each of the IoT devices from another device besides the IoT devices.

According to an embodiment, in operation 820, the artificial intelligence system may receive user context information (e.g., working, returning home, driving, resting, cleaning, etc.) from a context server (e.g., the context server 200). For example, the context server may generate the context information of a user based on the device usage information of IoT devices. The context server may receive device usage information of IoT devices. The device usage information may include the device usage log (e.g., device action information for each place or for each time) and service information (e.g., the execution information of an app). The context server may receive user location information (e.g., access information for each place) from the user terminal. The context server may generate user context information based on the device usage information and the user location information.

According to an embodiment, in operation 830, the artificial intelligence system may analyze the usage pattern of a user, based on the device usage log and the user context information. For example, the artificial intelligence system may generate usage pattern information corresponding to the user context of a specific user.

According to an embodiment, in operation 840, the artificial intelligence system may determine whether the device usage pattern matched with the current user context is present. For example, the artificial intelligence system may store the existing used device usage pattern. The artificial intelligence system may compare the current device usage pattern with the existing used device usage pattern. When the existing used device usage pattern partly matched with the current device usage pattern is not present, the artificial intelligence system may repeatedly perform operation 810 to operation 830. When the existing used device usage pattern partly matched with the current device usage pattern is present, the artificial intelligence system may perform operation 850.

According to an embodiment, in operation 850, the artificial intelligence system may recommend an additional device action to the user. For example, the artificial intelligence system may determine the device action, which is not in the current device usage pattern, from the existing used device usage pattern. The artificial intelligence system may transmit the determined device action to the user terminal.

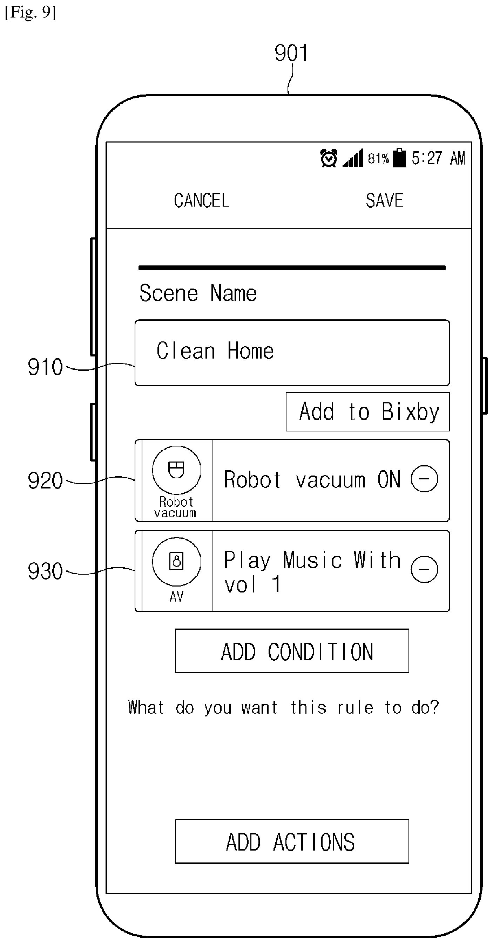

FIG. 9 is a view illustrating a method of displaying a recommended scene according to an embodiment of the disclosure.

Referring to FIG. 9, according to an embodiment, a user terminal 901 (e.g., the user terminal 400) may receive a scene from an artificial intelligence system (e.g., the artificial intelligence system 100). For example, the scene may include a scene name 910 and actions 920 and 930 of target devices. The scene name 910 may indicate the user context (e.g., cleaning) of a specific user. The actions 920 and 930 of the target devices may include the device usage pattern (e.g., adjusting the volume of a home speaker to level 1 during the action of the robot vacuum) by a specific user in the user context (e.g., cleaning).

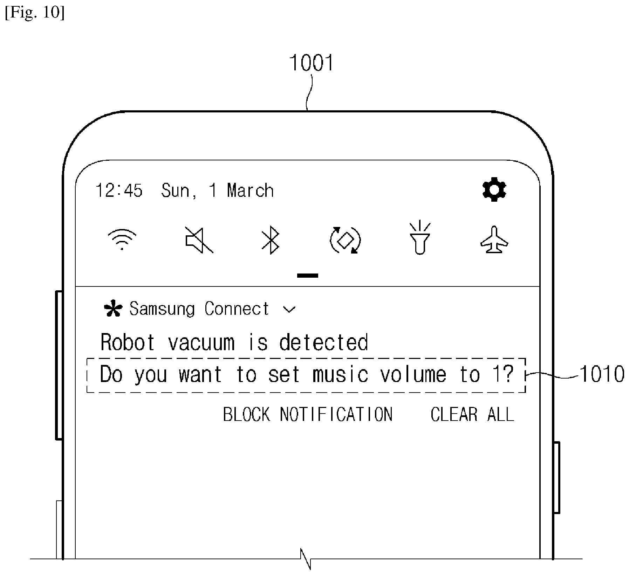

FIG. 10 is a view illustrating a method of displaying a recommended additional action according to an embodiment of the disclosure.

Referring to FIG. 10, according to an embodiment, a user terminal 1001 (e.g., the user terminal 400) may receive a scene from an artificial intelligence system (e.g., the artificial intelligence system 100). For example, when a user context is determined and a first device (e.g., a robot vacuum) is running, the artificial intelligence system may recommend the action 1010 (e.g., setting the volume of a home speaker) of a second device associated with the first device.

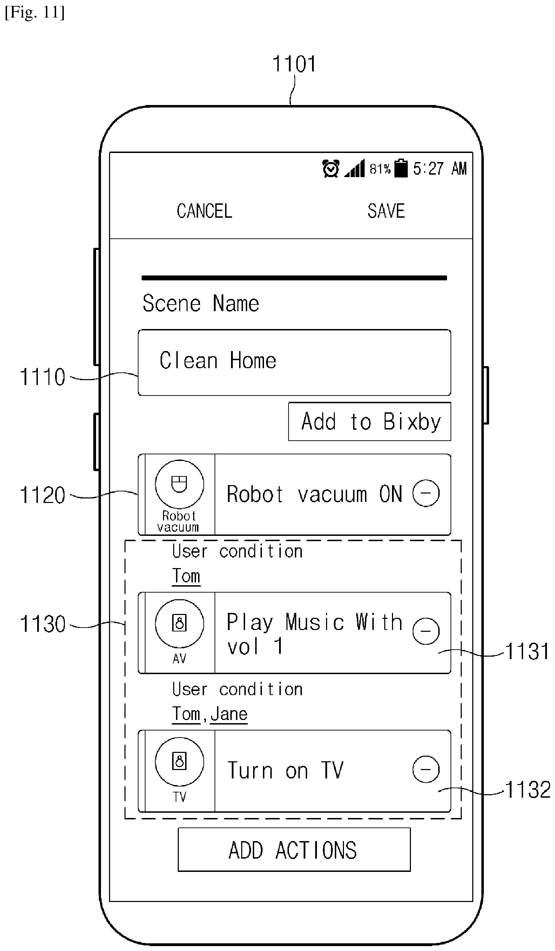

FIG. 11 is a view illustrating a method of displaying a recommended scene according to an embodiment of the disclosure.

Referring to FIG. 11, according to an embodiment, a user terminal 1101 (e.g., the user terminal 400) may receive a scene (e.g., scene name 1110 with action 1120) from an artificial intelligence system (e.g., the artificial intelligence system 100). For example, the artificial intelligence system may recommend another scene 1130 depending on whether an additional user is present. When the specific user is alone (1131) or when an additional user is present (1132), the artificial intelligence system may differently generate scenes.

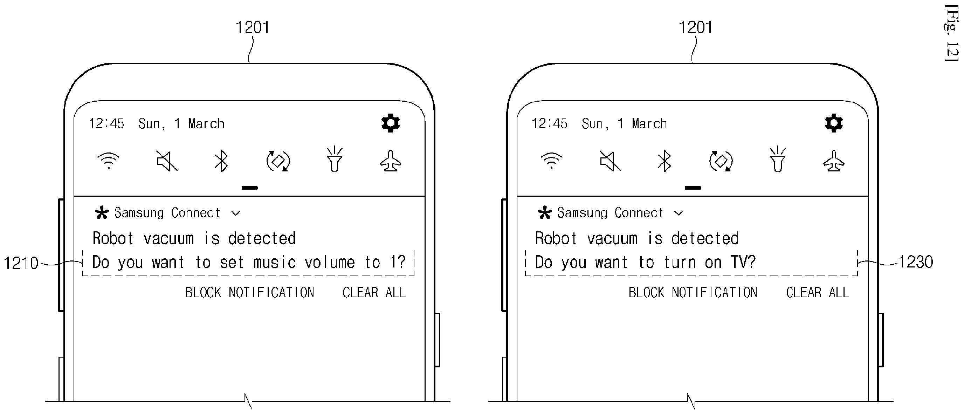

FIG. 12 is a view illustrating a method of displaying a recommended additional action according to an embodiment of the disclosure.

Referring to FIG. 12, according to an embodiment, a user terminal 1201 (e.g., the user terminal 400) may receive an additional scene from an artificial intelligence system (e.g., the artificial intelligence system 100). For example, the artificial intelligence system may differently recommend an additional action depending on whether an additional user is present. When the specific user is alone (1210) or when an additional user is present (1230), the artificial intelligence system may differently recommend additional scenes.

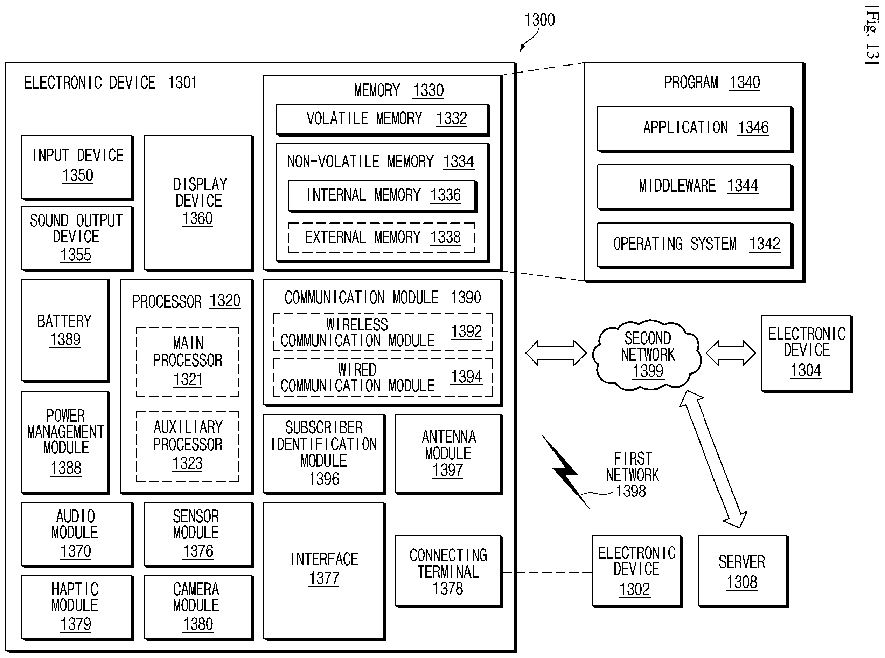

According to various embodiments of the disclosure, a system (e.g., the artificial intelligence system 100) may include at least one communication module (e.g., the communication module 1390 of FIG. 13 described later), at least one processor (e.g., the processor 1320 of FIG. 13), operatively connected to the at least one communication module, and at least one memory (e.g., the memory 1330 of FIG. 13) operatively connected to the at least one processor. The at least one memory may store instructions that, when executed, cause the processor to receive first information including log information of a first external device (e.g., the IoT devices 300 of FIG. 1) from the first external device associated with an account of a user, using the communication module, to receive second information including information sensed by a second external device (e.g., the user terminal 400 of FIG. 1), from the second external device associated with the account of the user, using the communication module, to determine a usage pattern of the first external device by the user, based on at least part of the first information and the second information, and to transmit third information based on at least part of the usage pattern to the second external device through the communication module to cause the second external device to display the third information.

According to various embodiments, the first external device may include an Internet of Thing (IoT) device.

According to various embodiments, the first information may include at least one of an attribute of the first external device, a state of the first external device, or a value corresponding to the state of the first external device.

According to various embodiments, the second information may include at least one of information associated with the second external device, a location, a time, a used app, or device information in proximity to the second external device.

According to various embodiments, when the instructions are executed, the processor may be configured to cause the second external device to provide a user interface for controlling the first external device based on the usage pattern of the first external device and to receive an input through the user interface.

According to various embodiments, the information based on at least part of the usage pattern may be differently generated depending on whether an additional user besides the user is present.

According to various embodiments, the processor may be configured to receive fourth information including a context of the user from a third external device determining the context of the user based on the first information, using the communication module.

According to various embodiments, the context may be determined depending on a series of behavior patterns of the user.

According to various embodiments, the context may be determined depending on a state of the user within a specific time period.

According to various embodiments, the third information based on at least part of the usage pattern may be registered as a command for a voice assistant call.

According to various embodiments of the disclosure, an operating method of a system (e.g., the artificial intelligence system 100) may include receiving first information including log information of a first external device (e.g., the IoT devices 300) used by a user, receiving second information including a context of the user from a second external device (e.g., the context server 200) determining the context of the user based on the first information, determining a usage pattern of the first external device, based on at least part of the first information and the second information, generating a scene corresponding to the user based on the context and the usage pattern, and transmitting the scene to a third external device so as to be displayed in the third external device.

According to various embodiments, the determining of the usage pattern of the first external device may include determining whether an additional user is present and integrating the first information and the second information.

According to various embodiments, whether the additional user is present may be determined by user location information received from the third external device.

According to various embodiments, the scene may include actions or states of the first external device and another external device, having time series characteristics.

According to various embodiments, the scene may include actions or states of the first external device and another external device, which are performed in different places.

According to various embodiments, the scene may include actions or states of the first external device and another external device, which are started at different points in time.

According to various embodiments, the scene may include actions or states of the first external device and another external device, which are started at different points in time.

According to various embodiments, the scene may include actions or states the first external device and another external device, which are defined in association with location movement of the user.

According to various embodiments, the scene may be differently generated depending on whether an additional user besides the user is present.

According to various embodiments of the disclosure, an operating method of a system (e.g., the artificial intelligence system 100) may include receiving first information including log information of a first external device (e.g., the IoT devices 300) used by a user, receiving second information including a context of the user from a second external device (e.g., the context server 200) determining the context of the user based on the first information, determining a current usage pattern of the first external device by the user, based on at least part of the first information and the second information, comparing the current usage pattern with a pre-stored previous usage pattern, determining an action pattern of the first external device, which is included in the previous usage pattern but is not included in the current usage pattern, and transmitting the determined action pattern to a third external device such that the determined action pattern is displayed in the third external device (e.g., the user terminal 400).

FIG. 13 is a block diagram illustrating an electronic device 1301 in a network environment 1300 according to an embodiment of the disclosure.

Referring to FIG. 13, the electronic device 1301 in the network environment 1300 may communicate with an electronic device 1302 via a first network 1398 (e.g., a short-range wireless communication network), or an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input device 1350, a sound output device 1355, a display device 1360, an audio module 1370, a sensor module 1376, an interface 1377, a haptic module 1379, a camera module 1380, a power management module 1388, a battery 1389, a communication module 1390, a subscriber identification module (SIM) 1396, or an antenna module 1397. In some embodiments, at least one (e.g., the display device 1360 or the camera module 1380) of the components may be omitted from the electronic device 1301, or one or more other components may be added in the electronic device 1301. In some embodiments, some of the components may be implemented as single integrated circuitry. For example, the sensor module 1376 (e.g., a fingerprint sensor, an iris sensor, or an illuminance sensor) may be implemented as embedded in the display device 1360 (e.g., a display).

The processor 1320 may execute, for example, software (e.g., a program 1340) to control at least one other component (e.g., a hardware or software component) of the electronic device 1301 coupled with the processor 1320, and may perform various data processing or computation. According to one embodiment, as at least part of the data processing or computation, the processor 1320 may load a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), and an auxiliary processor 1323 (e.g., a graphics processing unit (GPU), an image signal processor (ISP), a sensor hub processor, or a communication processor (CP)) that is operable independently from, or in conjunction with, the main processor 1321. Additionally or alternatively, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display device 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input device 1350 may receive a command or data to be used by another component (e.g., the processor 1320) of the electronic device 1301, from the outside (e.g., a user) of the electronic device 1301. The input device 1350 may include, for example, a microphone, a mouse, a keyboard, or a digital pen (e.g., a stylus pen).

The sound output device 1355 may output sound signals to the outside of the electronic device 1301. The sound output device 1355 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 1360 may visually provide information to the outside (e.g., a user) of the electronic device 1301. The display device 1360 may include, for example, a display, a hologram device, or a projector and control circuitry to control a corresponding one of the display, hologram device, and projector. According to an embodiment, the display device 1360 may include touch circuitry adapted to detect a touch, or sensor circuitry (e.g., a pressure sensor) adapted to measure the intensity of force incurred by the touch.

The audio module 1370 may convert a sound into an electrical signal and vice versa. According to an embodiment, the audio module 1370 may obtain the sound via the input device 1350, or output the sound via the sound output device 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, an HDMI connector, a USB connector, an SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture an image or moving images. According to an embodiment, the camera module 1380 may include one or more lenses, image sensors, image signal processors, or flashes.

The power management module 1388 may manage power supplied to the electronic device 1301. According to one embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, Wi-Fi direct, or infrared data association (IrDA)) or the second network 1399 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., printed circuit board (PCB)). According to an embodiment, the antenna module 1397 may include a plurality of antennas. In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the external electronic devices 1302 and 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory storage medium" means a tangible device, and does not include a signal (e.g., an electromagnetic wave), but this term does not differentiate between where data is semi-permanently stored in the storage medium and where the data is temporarily stored in the storage medium. For example, "the non-transitory storage medium" may include a buffer where data is temporally stored.

According to an embodiment, a method according to various embodiments of the disclosure may be included and provided in a computer program product. The computer program product may be traded as a product between a seller and a buyer. The computer program product (e.g., downloadable app)) may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to embodiments disclosed in the specification, a system may determine a user context and may generate and recommend a scene based on the user context.

According to embodiments disclosed in the specification, when generating the scene, the system may include devices associated with the user in the scene, based on the user context regardless of the location of the device.

According to embodiments disclosed in the specification, the system may select devices to be included in the scene based on the user context and may generate the scene in consideration of the execution order of the devices.

According to embodiments disclosed in the specification, the system may generate and recommend different scenes for each combination of users registered in the device included in the scene.

Besides, a variety of effects directly or indirectly understood through the disclosure may be provided.

While the disclosure has been shown and described with reference to various embodiments thereof, it will be understood by those skilled in the art that various changes in form and details may be made therein without departing from the scope of the invention as defined by the appended claims .

## Claims

1. A system (100) comprising:
at least one communication module (1390);
at least one processor (1320) operatively connected to the at least one communication module; and
at least one memory (1330) operatively connected to the at least one processor, wherein the at least one memory stores instructions that, when executed, cause the processor to:
receive first information including log information of each of a plurality of first external devices (300) from the plurality of first external devices associated with an account of a first user of the a plurality of users, using the communication module, wherein the log information indicates a usage record of each of the plurality of first external devices for each user of the plurality of users and time of the each one of the plurality of first external devices used by the each one of the plurality of users,
receive second information including information sensed by a second external device (400), from the second external device associated with the account of the first user, using the communication module,
wherein the second information includes location information associated with the second external device,
receive another location information from a third external device associated with a second user of the plurality of users,
based on the location information and the other location information, determine whether the second user and the first user are present in a same place,
determine a usage pattern of the plurality of the first external devices by the plurality of users, based the first information and the second information,
generate a scene according to the usage pattern by generating a first scene when the second user and the first user are not present in the same place and generating a second scene when the second user and the first user are present in the same place,
transmit the generated scene to the second external device through the communication module to cause the second external device to display the generated scene, and
register a voice command for a voice assistant call corresponding to the generated scene,
wherein the first scene and the second scene include different actions for the plurality of first external devices, and
wherein the instructions, when executed, further cause the processor to generate the scene according to the usage pattern by:
defining an order of actions of the plurality of the first devices based on the first information and whether the second user and the first user are present in a same place, and
generating the first scene or the second scene based on the order of actions of the plurality of the first devices.

2. The system of claim 1, wherein each of the plurality of first external devices includes an Internet of Thing, IoT, device.

3. The system of claim 1, wherein the first information includes at least one of an attribute of each one of the plurality of the first external devices, a state of each one of the plurality of the first external devices, or a value corresponding to the state of each one of the plurality of the first external devices, and
wherein the second information includes at least one of information associated with the second external device, a time, an application in use, or information of a device in proximity to the second external device.

4. The system of claim 1, wherein the instructions, when executed, further cause the processor to:
cause the second external device to provide a user interface for controlling the plurality of the first external devices based on the usage pattern of the plurality of the first external devices and to receive an input through the user interface.

5. The system of claim 1, wherein the instructions, when executed, further cause the processor to:
receive third information including a context of the plurality of the users from the third external device determining the context of the plurality of the user based on the first information, using the communication module.

6. The system of claim 5, wherein the context is further determined depending on behavior patterns of the plurality of the users or a state of the plurality of the users within a specific time period, and
wherein the behavior patterns of the plurality of the users are inferred based on the location information of each user and the usage pattern.

7. The system of claim 2,
wherein the log information comprises a usage record of each of the IoT devices for each of the plurality of the users.

8. An operating method of a system, the method comprising:
receiving first information including log information of each of a plurality of first external devices from the plurality of first external devices associated with an account of a first user of the a plurality of users, using the communication module, wherein the log information indicates a usage record of each of the plurality of first external devices for each user of the plurality of users and time of the each one of the plurality of first external devices used by the each one of the plurality of users,
receiving second information including information sensed by a second external device, from the second external device associated with the account of the user, wherein the second information includes location information associated with the second external device,
receiving another location information from a third external device associated with a second user of the plurality of users,
based on the location information and the other location information, determining whether the second user and the first user are present in a same place,
determining a usage pattern of the first external device by the user, based on the first information and the second information,
generating a scene according to the usage pattern by generating a first scene when the second user and the first user are not present in the same place and generating a second scene when the second user and the first user are present in the same place,
transmitting the generated scene to the second external device to cause the second external device to display the generated scene, and
registering a voice command for a voice assistant call corresponding to the generated scene,
wherein the first scene and the second scene include different actions for the plurality of first external devices, and
wherein generating the scene according to the usage pattern comprises:
defining an order of actions of the plurality of the first devices based on the first information and whether the second user and the first user are present in a same place; and
generating the first scene or the second scene based on the order of actions of the plurality of the first devices.

9. The method of claim 8, wherein the scene includes actions or states of each one of the plurality of the first external devices, having time series characteristics.

10. The method of claim 8, wherein the scene includes actions or states of each one of the plurality of the first external device, which are performed in different places or started at different points in time.

11. The method of claim 8, wherein the scene includes actions or states of each one of the plurality of the first external device, which are defined in association with location movement of each one of the plurality of the users.

## Patentansprüche

1. System (100), das Folgendes umfasst:
mindestens ein Kommunikationsmodul (1390);
mindestens einen Prozessor (1320), der mit dem mindestens einen Kommunikationsmodul operativ verbunden ist; und
mindestens einen Speicher (1330), der mit dem mindestens einen Prozessor operativ verbunden ist,
wobei der mindestens eine Speicher Anweisungen speichert, die, wenn sie ausgeführt werden, den Prozessor zu Folgendem veranlassen:
Empfangen von ersten Informationen, die Protokollinformationen von jeder einer Vielzahl von ersten externen Vorrichtungen (300) enthalten, von der Vielzahl von ersten externen Vorrichtungen, die mit einem Konto eines ersten Benutzers der Vielzahl von Benutzern assoziiert sind, unter Verwendung des Kommunikationsmoduls, wobei die Protokollinformationen einen Nutzungsdatensatz von jeder der Vielzahl von ersten externen Vorrichtungen für jeden Benutzer der Vielzahl von Benutzern und die Zeit von jeder der Vielzahl von ersten externen Vorrichtungen anzeigen, die von jedem der Vielzahl von Benutzern verwendet wird,
Empfangen von zweiten Informationen, die Informationen enthalten, die von einer zweiten externen Vorrichtung (400) erfasst werden, von der zweiten externen Vorrichtung, die mit dem Konto des ersten Benutzers assoziiert ist, unter Verwendung des Kommunikationsmoduls,
wobei die zweiten Informationen Standortinformationen enthalten, die mit der zweiten externen Vorrichtung assoziiert sind,
Empfangen weiterer Standortinformationen von einer dritten externen Vorrichtung, die mit einem zweiten Benutzer der Vielzahl von Benutzern assoziiert ist,
basierend auf den Standortinformationen und den weiteren Standortinformationen, Bestimmen, ob sich der zweite Benutzer und der erste Benutzer am selben Ort befinden,
Bestimmen eines Nutzungsmusters der Vielzahl der ersten externen Vorrichtungen durch die Vielzahl von Benutzern basierend auf den ersten Informationen und den zweiten Informationen,
Erzeugen einer Szene gemäß dem Nutzungsmuster durch Erzeugen einer ersten Szene, wenn sich der zweite Benutzer und der erste Benutzer nicht am selben Ort befinden, und Erzeugen einer zweiten Szene, wenn sich der zweite Benutzer und der erste Benutzer am selben Ort befinden,
Übertragen der erzeugten Szene an die zweite externe Vorrichtung durch das Kommunikationsmodul, um die zweite externe Vorrichtung zu veranlassen, die erzeugte Szene anzuzeigen, und
Registrieren eines Sprachbefehls für einen Sprachassistentenanruf, der der erzeugten Szene entspricht,
wobei die erste Szene und die zweite Szene verschiedene Aktionen für die Vielzahl von ersten externen Vorrichtungen enthalten, und
wobei die Anweisungen, wenn sie ausgeführt werden, den Prozessor ferner veranlassen, die Szene gemäß dem Nutzungsmuster durch Folgendes zu erzeugen:
Definieren einer Reihenfolge von Aktionen der Vielzahl der ersten Vorrichtungen basierend auf den ersten Informationen und darauf, ob sich der zweite Benutzer und der erste Benutzer am selben Ort befinden, und
Erzeugen der ersten Szene oder der zweiten Szene basierend auf der Reihenfolge von Aktionen der Vielzahl der ersten Vorrichtungen.

2. System nach Anspruch 1, wobei jede der Vielzahl von ersten externen Vorrichtungen eine Internet der Dinge(loT)-Vorrichtung enthält.

3. System nach Anspruch 1, wobei die ersten Informationen ein Merkmal von jeder der Vielzahl der ersten externen Vorrichtungen, einen Zustand von jeder der Vielzahl der ersten externen Vorrichtungen und/oder einen Wert enthalten, der dem Zustand von jeder der Vielzahl der ersten externen Vorrichtungen entspricht, und
wobei die zweiten Informationen Informationen, die mit der zweiten externen Vorrichtung assoziiert sind, eine Zeit, eine verwendete Anwendung und/oder Informationen einer Vorrichtung in der Nähe der zweiten externen Vorrichtung enthalten.

4. System nach Anspruch 1, wobei die Anweisungen, wenn sie ausgeführt werden, den Prozessor ferner zu Folgendem veranlassen:
Veranlassen, dass die zweite externe Vorrichtung eine Benutzeroberfläche zum Steuern der Vielzahl der ersten externen Vorrichtungen basierend auf dem Nutzungsmuster der Vielzahl der ersten externen Vorrichtungen bereitstellt und eine Eingabe durch die Benutzeroberfläche empfängt.

5. System nach Anspruch 1, wobei die Anweisungen, wenn sie ausgeführt werden, den Prozessor ferner zu Folgendem veranlassen:
Empfangen von dritten Informationen, die einen Kontext der Vielzahl der Benutzer enthalten, von der dritten externen Vorrichtung, die den Kontext der Vielzahl der Benutzer basierend auf den ersten Informationen bestimmt, unter Verwendung des Kommunikationsmoduls.

6. System nach Anspruch 5, wobei der Kontext ferner abhängig von Verhaltensmustern der Vielzahl der Benutzer oder einem Zustand der Vielzahl der Benutzer innerhalb eines spezifischen Zeitraums bestimmt wird, und
wobei die Verhaltensmuster der Vielzahl der Benutzer basierend auf den Standortinformationen jedes Benutzers und dem Nutzungsmuster abgeleitet werden.

7. System nach Anspruch 2, wobei die Protokollinformationen einen Nutzungsdatensatz von jeder der IoT-Vorrichtungen für jeden der Vielzahl der Benutzer umfasst.

8. Betriebsverfahren eines Systems, wobei das Verfahren Folgendes umfasst:
Empfangen von ersten Informationen, die Protokollinformationen von jeder einer Vielzahl von ersten externen Vorrichtungen enthalten, von der Vielzahl von ersten externen Vorrichtungen, die mit einem Konto eines ersten Benutzers der Vielzahl von Benutzern assoziiert sind, unter Verwendung des Kommunikationsmoduls, wobei die Protokollinformationen einen Nutzungsdatensatz von jeder der Vielzahl von ersten externen Vorrichtungen für jeden Benutzer der Vielzahl von Benutzern und die Zeit von jeder der Vielzahl von ersten externen Vorrichtungen anzeigen, die von jedem der Vielzahl von Benutzern verwendet wird,
Empfangen von zweiten Informationen, die Informationen enthalten, die von einer zweiten externen Vorrichtung erfasst werden, von der zweiten externen Vorrichtung, die mit dem Konto des Benutzers assoziiert ist, wobei die zweiten Informationen Standortinformationen enthalten, die mit der zweiten externen Vorrichtung assoziiert sind,
Empfangen weiterer Standortinformationen von einer dritten externen Vorrichtung, die mit einem zweiten Benutzer der Vielzahl von Benutzern assoziiert ist,
basierend auf den Standortinformationen und den weiteren Standortinformationen, Bestimmen, ob sich der zweite Benutzer und der erste Benutzer am selben Ort befinden,
Bestimmen eines Nutzungsmusters der ersten externen Vorrichtung durch den Benutzer basierend auf den ersten Informationen und den zweiten Informationen,
Erzeugen einer Szene gemäß dem Nutzungsmuster durch Erzeugen einer ersten Szene, wenn sich der zweite Benutzer und der erste Benutzer nicht am selben Ort befinden, und Erzeugen einer zweiten Szene, wenn sich der zweite Benutzer und der erste Benutzer am selben Ort befinden,
Übertragen der erzeugten Szene an die zweite externe Vorrichtung, um die zweite externe Vorrichtung zu veranlassen, die erzeugte Szene anzuzeigen, und
Registrieren eines Sprachbefehls für einen Sprachassistentenanruf, der der erzeugten Szene entspricht,
wobei die erste Szene und die zweite Szene verschiedene Aktionen für die Vielzahl von ersten externen Vorrichtungen enthalten, und
wobei das Erzeugen der Szene gemäß dem Nutzungsmuster Folgendes umfasst:
Definieren einer Reihenfolge von Aktionen der Vielzahl der ersten Vorrichtungen basierend auf den ersten Informationen und darauf, ob sich der zweite Benutzer und der erste Benutzer am selben Ort befinden; und
Erzeugen der ersten Szene oder der zweiten Szene basierend auf der Reihenfolge von Aktionen der Vielzahl der ersten Vorrichtungen.

9. Verfahren nach Anspruch 8, wobei die Szene Aktionen oder Zustände von jeder der Vielzahl der ersten externen Vorrichtungen enthält, die Zeitreihencharakteristiken aufweisen.

10. Verfahren nach Anspruch 8, wobei die Szene Aktionen oder Zustände von jeder der Vielzahl der ersten externen Vorrichtungen enthält, die an verschiedenen Orten ausgeführt oder zu verschiedenen Zeitpunkten begonnen werden.

11. Verfahren nach Anspruch 8, wobei die Szene Aktionen oder Zustände von jeder der Vielzahl der ersten externen Vorrichtungen enthält, die in Verbindung mit der Standortbewegung von jedem der Vielzahl der Benutzer definiert sind.

## Revendications

1. Système (100) comprenant :
au moins un module de communication (1390) ;
au moins un processeur (1320) connecté de manière opérationnelle à l'au moins un module de communication ; et
au moins une mémoire (1330) connectée de manière opérationnelle à l'au moins un processeur,
où l'au moins une mémoire stocke des instructions qui, lorsqu'elles sont exécutées, amènent le processeur à :
recevoir des premières informations incluant des informations de journal de chacun d'une pluralité de premiers dispositifs externes (300) de la pluralité de premiers dispositifs externes associés à un compte d'un premier utilisateur d'une pluralité d'utilisateurs, en utilisant le module de communication, où les informations de journal indiquent un enregistrement d'utilisation de chacun de la pluralité de premiers dispositifs externes pour chaque utilisateur de la pluralité d'utilisateurs et l'heure de chacun de la pluralité de premiers dispositifs externes utilisés par chacun de la pluralité d'utilisateurs,
recevoir des deuxièmes informations incluant des informations détectées par un deuxième dispositif externe (400), du deuxième dispositif externe associé au compte du premier utilisateur, en utilisant le module de communication,
où les deuxièmes informations incluent des informations de localisation associées au deuxième dispositif externe,
recevoir d'autres informations de localisation d'un troisième dispositif externe associé à un deuxième utilisateur de la pluralité d'utilisateurs,
sur la base des informations de localisation et des autres informations de localisation, déterminer si le deuxième utilisateur et le premier utilisateur sont présents à un même endroit,
déterminer un motif d'utilisation de la pluralité des premiers dispositifs externes par la pluralité d'utilisateurs, sur la base des premières informations et des deuxièmes informations,
générer une scène selon le motif d'utilisation en générant une première scène lorsque le deuxième utilisateur et le premier utilisateur ne sont pas présents au même endroit et en générant une deuxième scène lorsque le deuxième utilisateur et le premier utilisateur sont présents au même endroit,
transmettre la scène générée au deuxième dispositif externe par l'intermédiaire du module de communication pour amener le deuxième dispositif externe à afficher la scène générée, et
enregistrer une commande vocale pour un appel d'assistant vocal correspondant à la scène générée,
où la première scène et la deuxième scène incluent des actions différentes pour la pluralité de premiers dispositifs externes, et
où les instructions, lorsqu'elles sont exécutées, amènent en outre le processeur à générer la scène selon le motif d'utilisation en :
définissant un ordre d'actions de la pluralité des premiers dispositifs sur la base des premières informations et de la présence ou non du deuxième utilisateur et du premier utilisateur à un même endroit, et
générant la première scène ou la deuxième scène sur la base de l'ordre d'actions de la pluralité des premiers dispositifs.

2. Système selon la revendication 1, où chacun de la pluralité de premiers dispositifs externes inclut un dispositif de l'Internet des objets, IoT.

3. Système selon la revendication 1, où les premières informations incluent au moins un parmi un attribut de chacun de la pluralité des premiers dispositifs externes, un état de chacun de la pluralité des premiers dispositifs externes ou une valeur correspondant à l'état de chacun de la pluralité des premiers dispositifs externes, et
où les deuxièmes informations incluent au moins une parmi des information associées au deuxième dispositif externe, une heure, une application en cours d'utilisation ou des informations d'un dispositif à proximité du deuxième dispositif externe.

4. Système selon la revendication 1, où les instructions, lorsqu'elles sont exécutées, amènent en outre le processeur à :
amener le deuxième dispositif externe à fournir une interface utilisateur pour contrôler la pluralité des premiers dispositifs externes sur la base du motif d'utilisation de la pluralité des premiers dispositifs externes et à recevoir une entrée par l'intermédiaire de l'interface utilisateur.

5. Système selon la revendication 1, où les instructions, lorsqu'elles sont exécutées, amènent en outre le processeur à :
recevoir des troisièmes informations incluant un contexte de la pluralité des utilisateurs du troisième dispositif externe déterminant le contexte de la pluralité de l'utilisateur sur la base des premières informations, en utilisant le module de communication.

6. Système selon la revendication 5, où le contexte est en outre déterminé en fonction des motifs de comportement de la pluralité des utilisateurs ou d'un état de la pluralité des utilisateurs dans une période de temps spécifique, et
où les motifs de comportement de la pluralité des utilisateurs sont déduits sur la base des informations de localisation de chaque utilisateur et du motif d'utilisation.

7. Système selon la revendication 2, où les informations de journal comprennent un enregistrement d'utilisation de chacun des dispositifs loT pour chacun de la pluralité des utilisateurs.

8. Procédé de fonctionnement d'un système, le procédé comprenant :
recevoir des premières informations incluant des informations de journal de chacun d'une pluralité de premiers dispositifs externes de la pluralité de premiers dispositifs externes associés à un compte d'un premier utilisateur de la pluralité d'utilisateurs, en utilisant le module de communication, où les informations de journal indiquent un enregistrement d'utilisation de chacun de la pluralité de premiers dispositifs externes pour chaque utilisateur de la pluralité d'utilisateurs et l'heure de chacun de la pluralité de premiers dispositifs externes utilisés par chacun de la pluralité d'utilisateurs,
recevoir des deuxièmes informations incluant des informations détectées par un deuxième dispositif externe, du deuxième dispositif externe associé au compte de l'utilisateur, où les deuxièmes informations incluent des informations de localisation associées au deuxième dispositif externe,
recevoir d'autres informations de localisation d'un troisième dispositif externe associé à un deuxième utilisateur de la pluralité d'utilisateurs,
sur la base des informations de localisation et des autres informations de localisation, déterminer si le deuxième utilisateur et le premier utilisateur sont présents à un même endroit,
déterminer un motif d'utilisation du premier dispositif externe par l'utilisateur, sur la base des premières informations et des deuxièmes informations,
générer une scène selon le motif d'utilisation en générant une première scène lorsque le deuxième utilisateur et le premier utilisateur ne sont pas présents au même endroit et en générant une deuxième scène lorsque le deuxième utilisateur et le premier utilisateur sont présents au même endroit,
transmettre la scène générée au deuxième dispositif externe pour amener le deuxième dispositif externe à afficher la scène générée, et
enregistrer une commande vocale pour un appel d'assistant vocal correspondant à la scène générée,
où la première scène et la deuxième scène incluent des actions différentes pour la pluralité de premiers dispositifs externes, et
où la génération de la scène selon le motif d'utilisation comprend :
la définition d'un ordre d'actions de la pluralité des premiers dispositifs sur la base des premières informations et de la présence ou non du deuxième utilisateur et du premier utilisateur à un même endroit ; et
la génération de la première scène ou de la deuxième scène sur la base de l'ordre d'actions de la pluralité des premiers dispositifs.

9. Procédé selon la revendication 8, où la scène inclut des actions ou des états de chacun de la pluralité des premiers dispositifs externes, ayant des caractéristiques de séries de temps.

10. Procédé selon la revendication 8, où la scène inclut des actions ou des états de chacun de la pluralité des premiers dispositifs externes, qui sont effectués à des endroits différents ou démarrés à des moments différents dans le temps.

11. Procédé selon la revendication 8, où la scène inclut des actions ou des états de chacun de la pluralité du premier dispositif externe, qui sont définis en association avec le mouvement de localisation de chacun de la pluralité des utilisateurs.
